# EUROPEAN PATENT APPLICATION

(11) **EP 3 879 330 A1**
(43) Date of publication of application: **15.09.2021**
(21) Application number: 19883177.8
(22) Date of filing: 10.10.2019
(51) Int. Cl.: G02B 27/01, B32B 15/04, B60J 1/02, B60K 35/00

(54) **HEAD-UP DISPLAY DEVICE**

(30) Priority: 06.11.2018 JP 2018208896
(71) Applicant: Central Glass Company, Limited, Ube-shi, Yamaguchi 755-0001 (JP)
(72) Inventor: IZUTANI, Kensuke, Matsusaka-shi, Mie 515-0001 (JP); MORI, Naoya, Matsusaka-shi, Mie 515-0001 (JP)
(74) Representative: Mewburn Ellis LLP
(86) International application number: PCT/JP2019/039954
(87) International publication number: WO 2020/095612

(57) **Abstract**

A head-up display device that is to be mounted in a moving vehicle and enables an occupant in the moving vehicle to view a virtual image based on a reflected image of projection light in a projection section. The projection section includes an interlayer film, a first glass plate disposed closer to an outside of the moving vehicle, and a second glass plate disposed closer to an inside of the moving vehicle, the first glass plate and the second glass plate disposed opposite each other with the interlayer film therebetween. The first glass plate has a first main surface exposed to the outside and a second main surface opposite the first main surface. The second glass plate has a fourth main surface exposed to the inside and a third main surface opposite the fourth main surface. The first glass plate and the second glass plate each have a tin surface on which tin is detected and a non-tin surface whose tin concentration is lower than the tin concentration on the tin surface. The fourth main surface is defined by the tin surface. The virtual image is based on a first reflected image formed on the fourth main surface.

## Description

### TECHNICAL FIELD

The present disclosure relates to a head-up display (hereinafter, also referred to as "HUD") device that is to be mounted in a moving vehicle such as an automobile or aircraft and projects an image on a projection section in the front field of view of an occupant in the moving vehicle to enable the occupant to view the image.

### BACKGROUND ART

Windshields at the front of moving vehicles are used as the projection sections of HUD devices. The occupant views a virtual image based on a reflected image of projection light in the projection section. In the projection section, a first reflected image can be formed on the inside main surface and a second reflected image can be formed on the outside main surface. The occupant can therefore view the virtual image as a double image (for the mechanism of double image generation, see Non-Patent Literature 1). HUD devices are classified into wedge-HUD types, light polarization-HUD types, and types that adjust the reflectance of the inside main surface and/or of the outside main surface (this type is referred to as the "reflectance adjusting type"), based on their approach for double image reduction.

The wedge-HUD type utilizes a projection section having a wedge profile with a thickness that changes gradually to adjust the optical paths of projection light rays, so that the virtual image based on the first reflected image and the virtual image based on the second reflected image match when seen by the occupant (for the mechanism of double image reduction, see Non-Patent Literature 1).

The light polarization-HUD type reduces a double image based on the following mechanism. The projection section is formed using a laminate including a first light transmissive plate made of a material such as glass and disposed on the inside of the vehicle, a second light transmissive plate disposed on the outside of the vehicle, and a half-wave plate disposed between the first light transmissive plate and the second light transmissive plate. The components of the laminate are controlled to have equal refractive indexes in the visible spectrum. Projection light is incident on the projection section at Brewster's angle. The Brewster's angle for light incident on a float glass plate having a soda-lime silicate glass composition defined in ISO 16293-1 is 56°.

When the incident projection light includes S-polarized light, the reflected image is formed on the inside main surface of the first light transmissive plate. The projection light passing through the projection section is converted to P-polarized light. The P-polarized light, reaching the outside main surface of the second light transmissive plate, is emitted to the outside without being reflected at the outside main surface. The occupant views a virtual image based on the reflected image of S-polarized light formed on the inside main surface of the first light transmissive plate. This type is referred to as the S-HUD type.

When the incident projection light includes P-polarized light, the light is not reflected at the inside main surface of the first light transmissive plate. The projection light passing through the projection section is converted to S-polarized light. The projection light converted to S-polarized light, reaching the outside main surface of the second light transmissive plate, partly forms a reflected image at the outside main surface, with the rest of the light passing through the outside main surface. The projection light forming the reflected image passes through the projection section again and is thereby converted to P-polarized light. The occupant views a virtual image resulting from P-polarized light based on the reflected image formed on the outside main surface of the second light transmissive plate. This type is referred to as the P-HUD type.

The reflectance adjusting type increases the reflectance of visible light in the region where the reflected image on which a virtual image is based is formed, or decreases the reflectance of visible light in the region where the reflected image causing a double image is formed. For example, in Patent Literature 1, the region where the first reflected image is formed includes a coating having a high visible light reflectance. In Patent Literatures 2, 3 and 4 the region where the first reflected image is formed includes a coating having a high visible light reflectance while the region where the second reflected image is formed includes a coating having a low visible light reflectance. In Patent Literature 5, the region where the first reflected image is formed includes a coating having a low visible light reflectance and the region where the second reflected image is formed includes a coating having a high visible light reflectance.

### CITATION LIST

### Patent Literature

Patent Literature 1: JP H01-35141 U
Patent Literature 2: JP H01-35142 U
Patent Literature 3: JP H05-83789 U
Patent Literature 4: JP 2598605 Y2
Patent Literature 5: JP 2016-97781 A

### Non-Patent Literature

Non-Patent Literature 1: "Development of New Active Driving Display", Mazda Technical Review, No.33 (2016), pp. 60-65

### SUMMARY OF THE INVENTION

### Technical Problem

The key to double image reduction by the wedge-HUD type or the light polarization-HUD type is the optical path design for projection light. The wedge-HUD type adjusts the optical paths of projection light rays such that the virtual image based on the first reflected image and the virtual image based on the second reflected image match when seen by the occupant. The light polarization-HUD type adjusts the optical paths of projection light rays such that the projection light is incident on the projection section at Brewster's angle.

The next-generation HUD devices are desired to have a larger image display region, and thus the optical path design to reduce a double image tends to be difficult in the wedge-HUD type and the light polarization-HUD type. For example, in the light polarization-HUD type, increasing the image display region produces a region where the angle of incidence of projection light on the projection section is off the Brewster's angle.

The wedge-HUD type or the light polarization-HUD type may be combined with the reflectance adjusting type to successfully increase the image display region. Any of the coatings used to adjust the reflectance as disclosed in Patent Literatures 1 to 5 may therefore be disposed in the projection section for the wedge-HUD type or the light polarization-HUD type. However, use of a coating increases the angle dependence of reflectance because the optical path length varies depending on the angle of incidence. Thus, the double image reduction effect is small when the image display region is increased.

The present invention aims to provide a structure capable of adjusting the reflectance in a HUD device by a method other than use of a coating for the projection section, and provide a HUD device that can employ any of various types including the wedge-HUD type and the light polarization-HUD type.

### Solution to the Problem

In a head-up display device that is to be mounted in a moving vehicle and enables an occupant in the moving vehicle to view a virtual image based on a reflected image of projection light in a projection section, the projection section includes an interlayer film, a first glass plate disposed on an outside of the moving vehicle, and a second glass plate disposed on an inside of the moving vehicle, the first glass plate and the second glass plate opposing each other with the interlayer film therebetween.

The first glass plate and the second glass plate are each usually a glass plate produced by the float method (hereinafter, such a glass plate is also referred to as a "float glass plate"). A float glass plate, in the production thereof, is formed into a plate shape on a tin bath composed of molten tin. Thus, one of the main surfaces of the float glass plate is a tin surface which was in contact with the tin bath in the production thereof, and the other is a non-tin surface which is the surface opposite the tin surface. The tin surface is one on which tin is detected. The non-tin surface is one whose tin concentration is lower than the tin concentration on the tin surface.

The present inventors found that a float glass plate has a higher visible light reflectance on its tin surface than on its non-tin surface. This difference in visible light reflectance becomes significant on the incident surface of the float glass plate. The head-up display device according to an embodiment of the present invention takes advantage of the difference in visible light reflectance between the tin surface and the non-tin surface of the float glass plate.

In other words, a head-up display device according to an embodiment of the present invention is to be mounted in a moving vehicle and enables an occupant in the moving vehicle to view a virtual image based on a reflected image of projection light in a projection section,
the projection section having an interlayer film, a first glass plate disposed closer to an outside of the moving vehicle, and a second glass plate disposed closer to an inside of the moving vehicle, the first glass plate and the second glass plate disposed opposite each other with the interlayer film therebetween,
the first glass plate having a first main surface exposed to the outside and a second main surface opposite the first main surface,
the second glass plate having a fourth main surface exposed to the inside and a third main surface opposite the fourth main surface,
the first glass plate and the second glass plate each having a tin surface on which tin is detected and a non-tin surface whose tin concentration is lower than the tin concentration on the tin surface,
the fourth main surface being defined by the tin surface,
the virtual image being based on a first reflected image formed on the fourth main surface.

Since a virtual image is based on a first reflected image formed on the fourth main surface in this HUD device, use of the tin surface as the fourth main surface improves the sharpness of the virtual image based on the first reflected image. This improves the contrast between the virtual image to be viewed by the occupant and the virtual image causing a double image. The improvement of the contrast reduces the double image viewed by the occupant. Herein, a HUD device in which a virtual image to be viewed by the occupant is based on the first reflected image formed on the fourth main surface is referred to as a first HUD device.

Another embodiment of the first HUD device is a head-up display device that is to be mounted in a moving vehicle and enables an occupant in the moving vehicle to view a virtual image based on a reflected image of projection light in a projection section,
the projection section including an interlayer film, a first glass plate disposed closer to an outside of the moving vehicle, and a second glass plate disposed closer to an inside of the moving vehicle, the first glass plate and the second glass plate disposed opposite each other with the interlayer film therebetween,
the first glass plate having a first main surface exposed to the outside and a second main surface opposite the first main surface,
the second glass plate having a fourth main surface exposed to the inside and a third main surface opposite the fourth main surface,
the first glass plate and the second glass plate each having a tin surface on which tin is detected and a non-tin surface whose tin concentration is lower than the tin concentration on the tin surface,
the first main surface being defined by the non-tin surface,
the virtual image being based on a first reflected image formed on the fourth main surface.

Since a virtual image is based on a first reflected image formed on the fourth main surface in this HUD device, use of the non-tin surface as the first main surface improves the sharpness of the virtual image based on the first reflected image. This improves the contrast between the virtual image to be viewed by the occupant and the virtual image causing a double image. The improvement of the contrast reduces the double image viewed by the occupant.

Also, a head-up display device according to another embodiment of the present invention is to be mounted in a moving vehicle and enables an occupant in the moving vehicle to view a virtual image based on a reflected image of projection light in a projection section,
the projection section including an interlayer film, a first glass plate disposed closer to an outside of the moving vehicle, and a second glass plate disposed closer to an inside of the moving vehicle, the first glass plate and the second glass plate disposed opposite each other with the interlayer film therebetween,
the first glass plate having a first main surface exposed to the outside and a second main surface opposite the first main surface,
the second glass plate having a fourth main surface exposed to the inside and a third main surface opposite the fourth main surface,
the first glass plate and the second glass plate each having a tin surface on which tin is detected and a non-tin surface whose tin concentration is lower than the tin concentration on the tin surface,
the first main surface being defined by the tin surface,
the virtual image being based on a second reflected image formed on the first main surface.

Since a virtual image is based on a second reflected image formed on the first main surface in this HUD device, use of the tin surface as the first main surface improves the sharpness of the virtual image based on the second reflected image. This improves the contrast between the virtual image to be viewed by the occupant and the virtual image causing a double image. The improvement of the contrast reduces the double image viewed by the occupant. Herein, a HUD device in which a virtual image to be viewed by the occupant is based on the second reflected image formed on the first main surface is referred to as a second HUD device.

Another embodiment of the second HUD device is a head-up display device that is to be mounted in a moving vehicle and enables an occupant in the moving vehicle to view a virtual image based on a reflected image of projection light in a projection section,
the projection section including an interlayer film, a first glass plate disposed closer to an outside of the moving vehicle, and a second glass plate disposed closer to an inside of the moving vehicle, the first glass plate and the second glass plate disposed opposite each other with the interlayer film therebetween,
the first glass plate having a first main surface exposed to the outside and a second main surface opposite the first main surface,
the second glass plate having a fourth main surface exposed to the inside and a third main surface opposite the fourth main surface,
the first glass plate and the second glass plate each having a tin surface on which tin is detected and a non-tin surface whose tin concentration is lower than the tin concentration on the tin surface,
the fourth main surface being defined by the non-tin surface,
the virtual image being based on a second reflected image formed on the first main surface.

Since a virtual image is based on a second reflected image formed on the first main surface in this HUD device, use of the non-tin surface as the fourth main surface improves the sharpness of the virtual image based on the second reflected image. This improves the contrast between the virtual image to be viewed by the occupant and the virtual image causing a double image. The improvement of the contrast reduces the double image viewed by the occupant.

### Advantageous Effects of the Invention

HUD devices embodying the present invention improve the contrast between the virtual image to be viewed by the occupant and the virtual image causing a double image. The improvement of the contrast reduces the double image viewed by the occupant. The HUD devices adjust the reflectance in the projection section only by changing the arrangement pattern for the main surfaces of float glass plates. The HUD devices can therefore employ any of various types, including the wedge-HUD type and the light polarization-HUD type, without a negative effect on the optical characteristics of these types.

### BRIEF DESCRIPTION OF THE DRAWINGS

Fig. 1 is a schematic view showing the outline of a first HUD device according to an embodiment of the present invention, and optical paths in the device.
Fig. 2 is a schematic view showing the outline of a second HUD device according to an embodiment of the present invention, and optical paths in the device.
Fig. 3 is a schematic layout of a first HUD device used in an example.
Fig. 4 is a photograph showing a virtual image viewed in the example and a comparative example.

### DESCRIPTION OF EMBODIMENTS

The first HUD device of the present invention and the second HUD device of the present invention according to embodiments of the present invention are described with reference to the drawings.

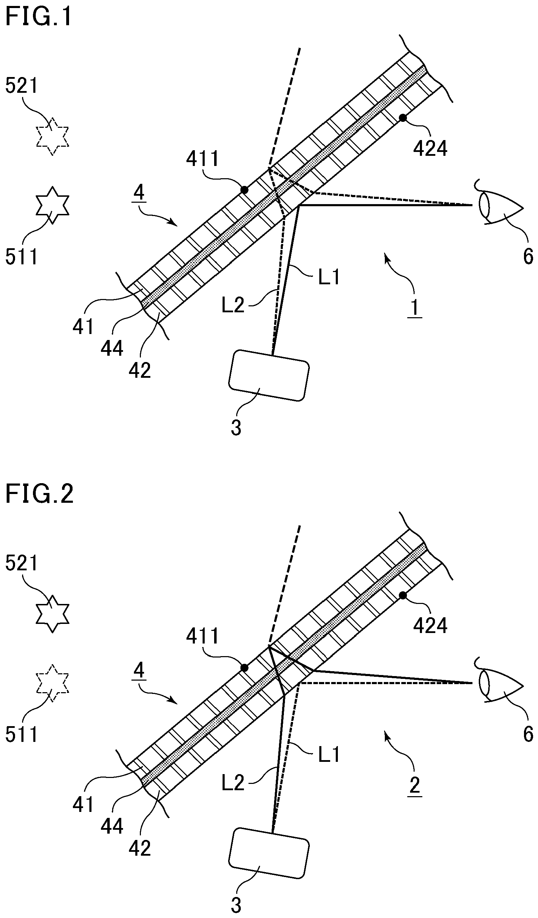

Fig. 1 is a schematic view showing the outline of a first HUD device according to an embodiment of the present invention and optical paths in the device.

Fig. 2 is a schematic view showing the outline of a second HUD device according to an embodiment of the present invention and optical paths in the device.

Fig. 1 and Fig. 2 show the optical path of projection light to be viewed by an occupant with a solid line and the optical path of projection light causing a double image with a dotted line. Rays of projection light from an image projector 3 reaching the eyes of an occupant 6 by being reflected on a fourth main surface 424 of a projection section 4 are referred to as light rays L1, and those reaching the eyes of the occupant 6 by being reflected on a first main surface 411 of the projection section 4 are referred to as light rays L2.

The projection section 4 includes an interlayer film 44, a first glass plate 41 disposed closer to the outside of a moving vehicle, and a second glass plate 42 disposed closer to the inside of the moving vehicle. The first glass plate 41 and the second glass plate 42 are disposed opposite each other with the interlayer film 44 therebetween.

The first glass plate 41 has a first main surface 411 exposed to the outside and a second main surface opposite the first main surface 411. The second glass plate 42 has a fourth main surface 424 exposed to the inside and a third main surface opposite the fourth main surface 424.

When the projection section 4 does not have a structure for double image reduction, the occupant 6 views a double image based on the following mechanism. The light rays L1 are applied to the fourth main surface 424 to form a first reflected image on the fourth main surface 424. The occupant 6 views a virtual image 511 based on the first reflected image.

The light rays L2 passing through the fourth main surface 424 reach the first main surface 411 to form a second reflected image on the first main surface 411. The occupant 6 views a virtual image 521 based on the second reflected image.

Thus, the position of the virtual image 511 formed by the light rays L1 and the position of the virtual image 521 formed by the light rays L2 are shifted from each other. This causes the occupant 6 to view the virtual images overlapping each other, i.e. a double image.

A first HUD device 1 is optically designed to enable observation of the virtual image 511 based on the first reflected image without observation of the virtual image 521 based on the second reflected image. Examples of such a HUD device include the wedge-HUD type and the S-HUD type. Specific structures thereof are described in detail in paragraphs below. When the occupant 6 views the virtual image 511 and the virtual image 521 at different positions and the contrast difference between the image luminance of the virtual image 511 and the image luminance of the virtual image 521 is small, the occupant 6 tends to view the virtual image 521 as a double image. Thus, a tin surface is used as the fourth main surface 424 to emphasize the first reflected image or a non-tin surface is used as the first main surface 411 to decrease the intensity of the second reflected image, so that the double image is reduced. Alternatively, a structure may be employed in which a tin surface is used as the fourth main surface 424 to emphasize the first reflected image and a non-tin surface is used as the first main surface 411 to decrease the intensity of the second reflected image.

A second HUD device 2 is optically designed to enable observation of the virtual image 521 based on the second reflected image without observation of the virtual image 511 based on the first reflected image. Examples of such a HUD device include the P-HUD type. Specific structure thereof is described in detail in paragraphs below. When the occupant 6 views the virtual image 521 and the virtual image 511 at different positions and the contrast difference between the image luminance of the virtual image 521 and the image luminance of the virtual image 511 is small, the occupant 6 tends to view the virtual image 511 as a double image. Thus, a tin surface is used as the first main surface 411 to emphasize the second reflected image or a non-tin surface is used as the fourth main surface 424 to decrease the intensity of the first reflected image, so that the double image is reduced. Alternatively, a structure may be employed in which a tin surface is used as the first main surface 411 to emphasize the second reflected image and a non-tin surface is used as the fourth main surface 424 to decrease the intensity of the first reflected image.

The first glass plate 41 and the second glass plate 42 each have a tin surface on which tin is detected and a non-tin surface whose tin concentration is lower than the tin concentration on the tin surface.

The first glass plate 41 and the second glass plate 42 are each preferably a float glass plate, more preferably a float glass plate having a soda-lime silicate glass composition defined in ISO 16293-1. The float glass plate is obtained by forming a molten glass material into a plate shape on a molten tin bath in the production process thereof. Thus, one of the main surfaces of the float glass plate is a tin surface which was in contact with the tin bath in the production thereof, and the other is a non-tin surface opposite the tin surface. In the process of forming a molten glass material into a plate shape, oxygen present in the atmosphere is dissolved in the tin bath or reacts with tin to form tin oxide. Tin and oxygen in the tin bath or part of tin oxide are/is taken into the surface of the glass material in contact with the tin bath, whereby a tin surface defines one of the main surfaces of the float glass plate. The other main surface opposite the tin surface is the non-tin surface.

The tin surface and the non-tin surface of a glass plate can be distinguished by the following method. The tin surface and the non-tin surface are different in the tin concentration on the surface, which is measurable by the X-ray fluorescence method.

The tin concentration on a surface is the concentration of Sn (unit: ppm) present in the range from the surface of the glass plate to several micrometers in the thickness direction. The X-ray fluorescence method includes determining the fluorescent X-ray intensities of standard specimens whose tin concentration on the surface has been measured by the wet chemical analysis, and creating a calibration curve based on the relationship between the fluorescent X-ray intensities and the tin concentrations on the surfaces. The tin concentration on a main surface of a float glass plate can be determined by comparing the fluorescent X-ray intensity of the main surface and the calibration curve. The tin concentration on the tin surface of a float glass plate is 10 ppm or more (the tin concentration on the non-tin surface is less than 10 ppm). Thus, whether the main surface of a float glass plate in question is a tin surface or a non-tin surface can be distinguished by determining the tin concentration on the main surface of the float glass plate.

The tin concentration on the tin surface can be controlled, in the process of forming a molten glass material into a plate shape, by adjusting the flow rate and/or concentration of gasses such as hydrogen and nitrogen in the atmosphere or by adjusting the temperature of the molten glass material or the residence time of the material on the tin bath.

Typically, the tin concentration on a surface tends to be small in a more reducing atmosphere.

Also, the tin concentration on a surface tends to be large when the temperature of the molten glass material is higher and the residence time of the material on the tin bath is longer.

The tin concentration on the tin surface affects the visible light reflectance of the main surfaces of a glass plate, and is therefore preferably 10 ppm to 300 ppm, more preferably 30 ppm to 160 ppm, still more preferably 40 ppm to 120 ppm.

The tin concentration on the non-tin surface is preferably less than 10 ppm for a lower visible light reflectance. The tin concentration is more preferably 5 ppm or less, still more preferably 2 ppm or less. The tin concentration is even more preferably unmeasurable, i.e. 0 ppm.

Described below are structures and materials to implement a preferred embodiment of the projection section used for the head-up display devices according to embodiments of the present invention.

The projection section is laminated glass produced by sandwiching an interlayer film between a first glass plate and a second glass plate. In the case of S-HUD type or P-HUD type HUD devices, the projection section includes a half-wave plate.

### Glass plates

The first glass plate and the second glass plate can each appropriately be a glass plate produced by the float method. The glass plate can be made of soda-lime silicate glass defined in ISO 16293-1 or can be one having a known glass composition such as aluminosilicate glass, borosilicate glass, or alkali-free glass. The thickness of each glass plate is preferably about 2 mm, but may be less than 2 mm for reduction in weight.

For a curved surface shape, two glass plates are heated to the softening point or higher, molded into the same surface shape by mold pressing or bending under their own weight, and cooled. Glass plates whose thickness gradually changes can also be used.

In the case of the wedge-HUD type, glass plates whose thickness is gradually changed can be used.

### Interlayer film

The interlayer film can be a resin interlayer film. The resin interlayer film is preferably a thermoplastic clear polymer. Examples of the polymer include polyvinyl butyral (PVB), ethylene vinyl acetate (EVA), acrylic resin (PMMA), urethane resin, polyethylene terephthalate (PET), and cycloolefin polymers (COP).

The surface of a resin interlayer film is usually embossed into uneven shape to prevent loss of transparency and bubble generation due to insufficient deaeration during lamination of glass plates into laminated glass. The HUD devices according to the embodiments of the present invention can also employ embossed resin interlayer films.

The resin interlayer film can be a partially colored one, one with a sound insulation layer sandwiched between layers, or one whose thickness is gradually changed. The resin interlayer film may also contain an ultraviolet absorber, an infrared absorber, an antioxidant, an antistatic agent, a heat stabilizer, a colorant, or an adhesion modifier as appropriate. The resin interlayer film may be extended under tension or passed between umbrella-shaped press rollers to be deformed into a fan shape.

In the case of the wedge-HUD type, an interlayer film whose thickness is gradually changed can be used.

### Half-wave plate

Examples of the half-wave plate include retarders formed by uniaxially or biaxially extending a plastic film such as a polycarbonate film, a polyarylate film, a polyethersulfone film, or a cycloolefin polymer film, and retarders formed by aligning the liquid crystal polymer molecules in a certain direction and fixing them in the aligned state. The polymer molecules are aligned, for example, by rubbing a transparent plastic film such as a polyester film or a cellulose film, or by forming an alignment film on a glass plate or a plastic film and subjecting the alignment film to rubbing or photo-alignment. The alignment is fixed, for example, by applying ultraviolet rays to an ultraviolet curable liquid crystal polymer in the presence of a photopolymerization initiator to cure the polymer through the polymerization reaction, by heating for crosslinking, or by aligning polymer molecules at high temperatures and quenching the polymer.

Any compound that is liquid crystalline when its molecules are aligned in a certain direction may be used as the liquid crystal polymer. For example, a compound that is in a twisted nematic alignment in its liquid crystal form and becomes glass at the liquid crystal transition temperature or lower. Examples thereof include optically active main-chain liquid crystal polymers such as polyester, polyamide, polycarbonate, and polyester imide; optically active side-chain liquid crystal polymers such as polyacrylate, polymethacrylate, polymalonate, polysiloxane, and polyether; and polymerizable liquid crystal. The examples can also include polymer compositions obtained by adding an optically active low molecular or high molecular compound to an optically inactive main-chain polymer or an optically inactive side-chain polymer.

The half-wave plate has only to be disposed in the optical path in the projection section. For example, the interlayer film may include a half-wave plate or a half-wave plate may be disposed in contact with a glass plate.

Described below are the light source and the projection light to be incident on the projection section in the head-up display devices according to the embodiments of the present invention.

### Light source and projection light

The projection light from an image projector can be projection light including P-polarized light and S-polarized light.

Examples of the projection light including P-polarized light and S-polarized light include randomly polarized light (unpolarized light), circularly polarized light, elliptically polarized light, mixed light of P-polarized light and S-polarized light, and linearly polarized light that is not P-polarized light or S-polarized light.

The image projector can suitably be a projector capable of applying projection light including P-polarized light and S-polarized light. Examples of such a projector include DMD projection system-based projectors, laser scanning MEMS projection system-based projectors, and reflective liquid crystal-based projectors.

A polarizer disposed in the path of projection light can convert projection light including P-polarized light and S-polarized light to projection light consisting of P-polarized light or projection light consisting of S-polarized light. Also, a retarder disposed in the path of projection light can convert projection light consisting of S-polarized light to projection light consisting of P-polarized light, projection light consisting of P-polarized light to projection light consisting of S-polarized light, or linearly polarized light to projection light consisting of P-polarized light or S-polarized light. The P-HUD type and the S-HUD type are switched by adjusting projection light to be projection light including P-polarized light or projection light including S-polarized light.

The polarizer is provided with a transmission window transmitting linearly polarized light oscillating in one direction, and is disposed with the transmission window faced in the direction in which the projection light travels.

A sliding mechanism (not shown) may be used to place one of two polarizers such that projection light travels through the one polarizer and thereby to switch between the P-HUD type and the S-HUD type.

Projection light is preferably incident on the projection section at Brewster's angle.

Described below are the wedge-HUD type, the S-HUD type, and the P-HUD type to be applied to the head-up display devices according to embodiments of the present invention.

The first HUD device is preferably the wedge-HUD type or the S-HUD type.

In the wedge-HUD type, the projection section has a wedge profile with a thickness that changes gradually in the region of the first reflected image or the second reflected image.

In the wedge-HUD type, the projection light may be with any polarization, and projection light including P-polarized light and S-polarized light is usable.

In this case, a first reflected image is formed on the fourth main surface of the projection section, so that an occupant in the moving vehicle views a virtual image based on the first reflected image on the fourth main surface. A second reflected image is formed on the first main surface of the projection section. Controlling the wedge profile to superimpose the second reflected image and first reflected image with each other prevents generation of a double image.

Also, use of the tin surface as the fourth main surface improves the sharpness of the virtual image based on the first reflected image. This reduces the influence of the second reflected image in the boundaries of a region in which the second reflected image and the first reflected image are superimposed with each other owing to the wedge profile. As a result, the image display region is substantially increased.

The region of the first reflected image in such an increased image display region preferably extends 150 mm or more in the vertical direction of the projection section.

Also, the region of the first reflected image preferably extends 150 mm or more in the horizontal direction of the projection section.

In the S-HUD type, preferably, the projection light includes S-polarized light and the interlayer film includes a half-wave plate. The projection light including S-polarized light is preferably incident on the first main surface at ±10° from Brewster's angle, more preferably at Brewster's angle. Here, a first reflected image is formed on the fourth main surface of the projection section, and an occupant in the moving vehicle views a virtual image based on the first reflected image on the fourth main surface. Projection light passing through the fourth main surface and travelling in the projection section is converted to P-polarized light by the half-wave plate, and emitted to the outside as P-polarized light without being reflected on the first main surface of the projection section.

Use of the tin surface as the fourth main surface or use of the non-tin surface as the first main surface improves the sharpness of the virtual image based on the first reflected image. This reduces the influence of the second reflected image on the region in which the projection light is incident on the projection section at an angle shifted from Brewster's angle. As a result, the image display region is substantially increased.

The region of the first reflected image in such an increased image display region preferably extends 150 mm or more in the vertical direction of the projection section.

The second HUD device is preferably the P-HUD type. In the P-HUD type, preferably, the projection light includes P-polarized light, and the interlayer film includes a half-wave plate. The projection light including P-polarized light is preferably incident on the fourth main surface at ±10° from Brewster's angle, more preferably at Brewster's angle. Here, the projection light is not reflected on the fourth main surface. The projection light travelling in the projection section is converted to S-polarized light by the half-wave plate. The projection light forms a second reflected image on the first main surface. The projection light having passed through the first main surface is emitted to the outside as S-polarized light.

The projection light having formed the second reflected image on the first main surface passes through the half-wave plate again to be converted to P-polarized light. The occupant in the moving vehicle views the virtual image based on the second reflected image on the first main surface. This virtual image is created by P-polarized light, and is therefore viewable by the occupant even through polarized sunglasses.

Use of the tin surface as the first main surface or use of the non-tin surface as the fourth main surface improves the sharpness of the virtual image based on the second reflected image. This reduces the influence of the first reflected image on the region in which the projection light is incident on the projection section at an angle shifted from Brewster's angle. As a result, the image display region is substantially increased.

The region of the second reflected image in such an increased image display region preferably extends 150 mm or more in the vertical direction of the projection section.

In the case where a HUD device having an increased image region is required, the region of the first reflected image or the region of the second reflected image extends 150 mm or more in the vertical direction of the projection section. Here, although the wedge-HUD type, the S-HUD type, and the P-HUD type reduces a double image, the double image tends to be more observable at a position farther from the center of the optical axis of projection light, especially when the moving vehicle is driven at night. The background of the image of the HUD viewed by the occupant is almost black when the moving vehicle is driven at night. Such a background causes even an image slightly reflected, i.e. even a virtual image based on a reflected image causing a double image, to be easily viewable by the occupant. As described above, the first main surface and/or the fourth main surface in the first and second HUD devices according to the embodiments of the present invention are/is defined by an appropriate tin surface or non-tin surface, so that any of the wedge-HUD type, the S-HUD type, and the P-HUD type can achieve double image reduction.

### Production procedure of laminated glass

Described below is a suitable example of the method of producing laminated glass to be used as the projection section of the head-up display devices according to the embodiments of the present invention.

One of the glass plates is placed horizontally, and an interlayer film (resin interlayer film) is stacked on the glass plate, followed by stacking of the other glass plate on the interlayer film. When PVB is used as the resin interlayer film, the temperature and the humidity during the process are preferably maintained constant to keep the optimal moisture content of PVB. The stack including the resin interlayer film sandwiched between the glass plates is heated to a temperature of 80°C to 100°C while being deaerated for preliminary bonding. The stack is deaerated by, for example, a bag method of wrapping the stack of the glass plates and the resin interlayer film with a rubber bag made of a heat-resistant rubber, for example; a ring method of covering only the ends of the glass plates of the stack with rubber rings and sealing the stack; or a roller method of passing the stack between rollers to press the stack from the outermost two glass plates. Any of these methods may be used.

After the preliminary bonding, the resulting laminate is taken out of the rubber bag in the case of the bag method, or the rubber rings are removed from the laminate in the case of the ring method. The laminate is then placed in an autoclave for heating and pressurization (final bonding) where the laminate is heated at a temperature of 120°C to 150°C and a high pressure of 10 to 15 kg/cm² for 20 to 40 minutes. After this process, the laminate is cooled to 50°C or lower, depressurized, and the resulting laminated glass is taken out of the autoclave.

The laminated glass, when used as the projection section of a wedge-HUD type HUD device, includes an interlayer film or glass plates whose thickness is gradually changed.

Use of an interlayer film or glass plates whose thickness is gradually changed imparts a wedge profile with a thickness that changes gradually to the region of the first reflected image or the second reflected image in the projection section.

The laminated glass, when used as the projection section of an S-HUD type or P-HUD type HUD device, includes a half-wave plate as a layer in the interlayer film between the glass plates, or includes a half-wave plate bonded to the surface of a glass plate in contact with the interlayer film. The half-wave plate has only to be disposed in a region where a reflected image is formed, and may have the same size as the glass plates or may be smaller than the glass plates.

### EXAMPLES

Here, the measured visible light reflectance values of the tin surfaces and the non-tin surfaces of float glass plates are described. The visible light reflectance values of the tin surface and the non-tin surface of each float glass plate were measured in accordance with JIS R3106 (1998) using their spectral reflectance spectra in the wavelength range of 380 nm to 780 nm.

Here, the angle of incidence of projection light on a measurement specimen was changed from that in the JIS standard above to 40°, 56° (Brewster's angle), or 70°, and the light spectrum relating to the weighing factor was changed from the JIS standard to CIE Illuminant A.

Also, measurements were made on visible light reflectance values for reflection of the measurement light on the incident surface of a glass plate (corresponding to the fourth main surface 424 of the projection section 4) toward the air and visible light reflectance values for reflection on the emitting surface (corresponding to the first main surface 411 of the projection section 4) toward the glass medium.

In the measurement of the spectral reflectance spectrum <1> on the incident surface toward the air, the emitting surface of the glass plate was blasted and coated with black matte spray to reduce the reflection of light at the emitting surface.

The spectral reflectance spectrum <2> of the measurement light on the emitting surface toward the glass medium was determined by eliminating the spectral reflectance spectrum <1> from a spectral reflectance spectrum <3>, i.e. <2> = <3> - <1>. The spectral reflectance spectrum <1> is one on the incident surface toward the air. The spectral reflectance spectrum <3> (including both reflection on the incident surface toward the air and reflection on the emitting surface toward the glass medium) is of a glass plate without the above surface processing (blasting and matte spray coating) at each wavelength.

The visible light reflectance values of the tin surface and the non-tin surface of each float glass plate are shown in Tables 1 and 2. The projection light here includes S-polarized light and P-polarized light at a mixing ratio of 1:1.

Table 2 shows the difference between the reflectance on the incident surface and the reflectance on the emitting surface. Tables 1 and 2 show that the visible light reflectance on the tin surface is higher than the visible light reflectance on the non-tin surface. The difference in visible light reflectance between these surfaces may seem small. However, since the absolute values of the visible light reflectance values themselves are not large, the difference has a large influence on the first reflected image or the second reflected image.

The visible light reflectance values <A> and <C> on the incident surfaces shown in Table 1 and Table 2 affect the first reflected image, while the visible light reflectance values <B> and <D> on the emitting surfaces affect the second reflected image.

In the first HUD device, a higher reflectance on the incident surface and a lower reflectance on the emitting surface are preferred for double image reduction. For example, the difference "<A>-<B>" is 2.5%, the difference "<C>-<D>" is 1.9%, and the difference between them is 0.6% in the results of the clear glass at an angle of incidence of 56°.

Since the visible light reflectance on the incident surface is about 7%, even with such a difference, the projection section 4 having <A> and <B> in combination has a greater influence on double image reduction than the projection section 4 having <C> and <D> in combination does.

Consequently, the first HUD device achieves double image reduction by using the tin surface as the fourth main surface or the non-tin surface as the first main surface.

In contrast, in the second HUD device, a higher reflectance on the emitting surface and a lower reflectance on the incident surface are preferred for double image reduction. Thus, the second HUD device achieves double image reduction by using the tin surface as the first main surface or the non-tin surface as the fourth main surface.

**Table 1**

| Float glass plate | | | Visible light reflectance (%) | | | | | | | | | | | |
|---|---|---|---|---|---|---|---|---|---|---|---|---|---|---|
| | | | Incident surface (fourth main surface) defined by tin surface | | | | | | Incident surface (fourth main surface) defined by non-tin surface | | | | | |
| Glass type | Thickness (mm) | Amount of tin on tin surface (ppm) | <A> Reflection on tin surface | | | <B> Reflection on non-tin surface | | | <C> Reflection on non-tin surface | | | <D> Reflection on tin surface | | |
| | | | (Reflection on incident surface (fourth main surface)) | | | (Reflection on emitting surface (first main surface)) | | | (Reflection on incident surface (fourth main surface)) | | | (Reflection on emitting surface (first main surface)) | | |
| | | | Angle of incidence | | | | | | | | | | | |
| | | | 40° | 56° | 70° | 40° | 56° | 70° | 40° | 56° | 70° | 40° | 56° | 70° |
| Clear glass | 2 | 86 | 5.0 | 7.7 | 17.6 | 4.1 | 5.2 | 9.8 | 4.8 | 7.5 | 17.3 | 4.5 | 5.6 | 10.1 |
| Green glass | 2 | 77 | 5.0 | 7.8 | 17.5 | 3.6 | 4.4 | 8.5 | 4.8 | 7.5 | 17.2 | 3.8 | 4.7 | 8.8 |
| UV cut glass | 2 | 48 | 5.1 | 7.9 | 17.6 | 3.2 | 3.9 | 7.6 | 4.7 | 7.5 | 17.2 | 3.5 | 4.0 | 7.6 |

**Table 2**

| Float glass plate | | | Difference in visible light reflectance (%) | | | | | |
|---|---|---|---|---|---|---|---|---|
| | | | Incident surface (fourth main surface) defined by tin surface | | | Incident surface (fourth main surface) defined by non-tin surface | | |
| Glass type | Thickness (mm) | Amount of tin on tin surface (ppm) | <A> - <B> | | | <C> - <D> | | |
| | | | Angle of incidence | | | | | |
| | | | 40° | 56° | 70° | 40° | 56° | 70° |
| Clear glass | 2 | 86 | 0.9 | 2.5 | 7.8 | 0.3 | 1.9 | 7.2 |
| Green glass | 2 | 77 | 1.4 | 3.4 | 9.0 | 1.0 | 2.8 | 8.4 |
| UV cut glass | 2 | 48 | 1.9 | 4.0 | 10.0 | 1.2 | 3.5 | 9.6 |

Table 3 shows the results of comparing the visible light reflectance ratios by varying the combination of the tin surface and the non-tin surface for the first glass plate and the second glass plate in a wedge-HUD type first HUD device.

This test allows light including S-polarized light and P-polarized light at a mixing ratio of 1:1 to be incident on the fourth main surface at an angle of incidence of 56°.

The results show that the visible light reflectance ratio is highest when the tin surface is used as the fourth main surface and the non-tin surface is used as the first main surface. This suggests that a double image is most reduced by the combination of the tin surface as the fourth main surface and the non-tin surface as the first main surface.

**Table 3**

| First HUD device (w edge-HUD type) | | | | Visible light reflectance (%) | | Visible light reflectance ratio |
|---|---|---|---|---|---|---|
| | | | | Incidence on fourth main surface | | |
| Fourth main surface (inside surface) | | First main surface (outside surface) | | Reflection on fourth main surface | Reflection on first main surface | |
| | | | | (Reflection on incident surface) | (Reflection on emitting surface) | |
| | | | | 56° | 56° | |
| Green glass 2 mm | Tin surface | Green glass 2 mm | Non-tin surface | 7.7 | 3.3 | 2.3 |
| Green glass 2 mm | Non-tin surface | Green glass 2 mm | Tin surface | 7.4 | 3.8 | 1.9 |
| Green glass 2 mm | Tin surface | Green glass 2 mm | Tin surface | 7.7 | 3.8 | 2.0 |
| Green glass 2 mm | Non-tin surface | Green glass 2 mm | Non-tin surface | 7.4 | 3.8 | 1.9 |

Table 4 shows the results of comparing the visible light reflectance ratios by varying the combination of the tin surface and the non-tin surface for the first glass plate and the second glass plate in an S-HUD type first HUD device.

This test allows S-polarized light to be incident on the fourth main surface at an angle of incidence of 56°.

The results show that the visible light reflectance ratio is highest when the tin surface is used as the fourth main surface and the non-tin surface is used as the first main surface. This suggests that a double image is most reduced by the combination of the tin surface as the fourth main surface and the non-tin surface as the first main surface.

**Table 4**

| First HUD device (S-HUDtype) | | | | Visible light reflectance (%) | | Visible light ref lectance ratio |
|---|---|---|---|---|---|---|
| | | | | Incidence on fourth main surface | | |
| Fourth main surface (inside surface) | | First main surface (outside surface) | | Reflection on fourth main surface | Reflection on first main surface | |
| | | | | (Reflection on incident surface) | (Reflection on emitting surface) | |
| | | | | 56° | 56° | |
| Green glass 2 mm | Tin surface | Green glass 2 mm | Non-tin surface | 15.8 | 0.8 | 19.8 |
| Green glass 2 mm | Non-tin surface | Green glass 2 mm | Tin surface | 15.3 | 0.9 | 16.9 |
| Green glass 2 mm | Tin surface | Green glass 2 mm | Tin surface | 15.8 | 0.9 | 17.6 |
| Green glass 2 mm | Non-tin surface | Green glass 2 mm | Non-tin surface | 15.2 | 0.9 | 16.1 |

Table 5 shows the results of comparing the visible light reflectance ratios by varying the combination of the tin surface and the non-tin surface for the first glass plate and the second glass plate in a P-HUD type second HUD device.

This test allows P-polarized light to be incident on the fourth main surface at an angle of incidence of 56°.

The results show that the visible light reflectance ratio is highest when the non-tin surface is used as the fourth main surface and the tin surface is used as the first main surface. This suggests that a double image is most reduced by the combination of the non-tin surface as the fourth main surface and the tin surface as the first main surface.

**Table 5**

| Second HUD device (P-HUD type) | | | | Visible light reflectance (%) | | Visible light reflectance ratio |
|---|---|---|---|---|---|---|
| | | | | Incidence on fourth main surface | | |
| Fourth main surface (inside surface) | | First main surface (outside surface) | | Reflection on fourth main surface | Reflection on first main surface | |
| | | | | (Reflection on incident surface) | (Reflection on emitting surface) | |
| | | | | 56° | 56° | |
| Green glass 2 mm | Tin surface | Green glass 2 mm | Non-tin surface | 0.6 | 8.7 | 13.5 |
| Green glass 2 mm | Non-tin surface | Green glass 2 mm | Tin surface | 0.5 | 8.9 | 17.0 |
| Green glass 2 mm | Tin surface | Green glass 2 mm | Tin surface | 0.6 | 8.8 | 14.4 |
| Green glass 2 mm | Non-tin surface | Green glass 2 mm | Non-tin surface | 0.6 | 8.8 | 15.5 |

### Verification of HUD device with increased image region

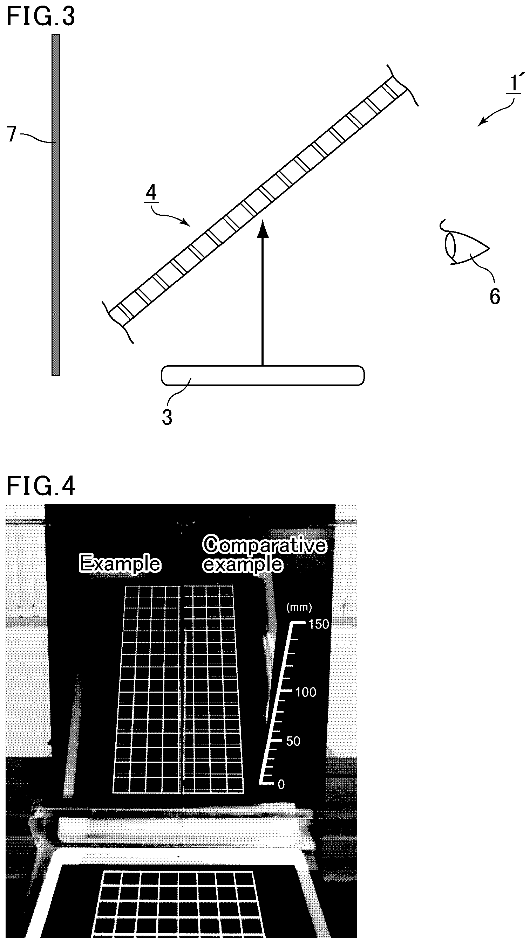

Fig. 3 is a schematic layout of a first HUD device used in an example.

A first HUD device 1' as shown in Fig. 3 was prepared. The first HUD device 1' includes a projection section 4 having a 300 mm × 300 mm square shape for the S-HUD type.

In the example, the fourth main surface is defined by a tin surface and the first main surface is defined by a non-tin surface. In the comparative example, the fourth main surface is defined by a non-tin surface and the first main surface is defined by a tin surface. As shown in Fig. 3, the image projector 3 is placed horizontally, and the projection section 4 is disposed at Brewster's angle, i.e. 56°, from the image projector 3. The image projector 3 applies projection light including S-polarized light upwardly in the vertical direction to enable the occupant 6 to view a virtual image displayed to the projection section 4. The size of the reflected image formed on the projection section 4 is set to 150 mm in the vertical direction (the direction that is the same as the vertical direction within the parts of the projection section 4 and that is at 56° from the image projector 3 in the present example and comparative example).

For simulation of night driving of a moving vehicle, a black background plate 7 is disposed behind the projection section 4 in the direction in which the occupant 6 views.

Fig. 4 is a photograph showing a virtual image viewed in the example and a comparative example.

The left half corresponds to the example, and the right half corresponds to the comparative example.

The virtual image viewed in the comparative example shown on the right half appeared as a double image extending in the horizontal direction, especially in the lower half of the virtual image.

The virtual image viewed in the example shown in the left half shows that the double image was reduced within the size of 150 mm in the vertical direction of the projection section in the example.

### INDUSTRIAL APPLICABILITY

A HUD device is provided that can increase the image display region in the front glass of a vehicle such as an automobile.

### REFERENCE SIGNS LIST

- 1,1': first HUD device
- 2: second HUD device
- 3: image projector
- 4: projection section
- 6: occupant
- 7: background plate
- 41: first glass plate
- 411: first main surface
- 42: second glass plate
- 424: fourth main surface
- 44: interlayer film
- 511: virtual image based on first reflected image
- 521: virtual image based on second reflected image

## Claims

1. A head-up display device that is to be mounted in a moving vehicle and enables an occupant in the moving vehicle to view a virtual image based on a reflected image of projection light in a projection section,
the projection section including an interlayer film, a first glass plate to be disposed closer to an outside of the moving vehicle, and a second glass plate to be disposed closer to an inside of the moving vehicle, the first glass plate and the second glass plate being disposed opposite each other with the interlayer film therebetween,
the first glass plate having a first main surface exposed to the outside and a second main surface opposite the first main surface,
the second glass plate having a fourth main surface exposed to the inside and a third main surface opposite the fourth main surface,
the first glass plate and the second glass plate each having a tin surface on which tin is detected and a non-tin surface whose tin concentration is lower than the tin concentration on the tin surface,
the fourth main surface being defined by the tin surface,
the virtual image being based on a first reflected image formed on the fourth main surface.

2. Head-up display device according to claim 1 wherein the first main surface is defined by the non-tin surface.

3. A head-up display device that is to be mounted in a moving vehicle and enables an occupant in the moving vehicle to view a virtual image based on a reflected image of projection light in a projection section,
the projection section including an interlayer film, a first glass plate to be disposed closer to an outside of the moving vehicle, and a second glass plate to be disposed closer to an inside of the moving vehicle, the first glass plate and the second glass plate being disposed opposite each other with the interlayer film therebetween,
the first glass plate having a first main surface exposed to the outside and a second main surface opposite the first main surface,
the second glass plate having a fourth main surface exposed to the inside and a third main surface opposite the fourth main surface,
the first glass plate and the second glass plate each having a tin surface on which tin is detected and a non-tin surface whose tin concentration is lower than the tin concentration on the tin surface,
the first main surface being defined by the non-tin surface,
the virtual image being based on a first reflected image formed on the fourth main surface.

4. A head-up display device that is to be mounted in a moving vehicle and enables an occupant in the moving vehicle to view a virtual image based on a reflected image of projection light in a projection section,
the projection section including an interlayer film, a first glass plate to be disposed closer to an outside of the moving vehicle, and a second glass plate to be disposed closer to an inside of the moving vehicle, the first glass plate and the second glass plate being disposed opposite each other with the interlayer film therebetween,
the first glass plate having a first main surface exposed to the outside and a second main surface opposite the first main surface,
the second glass plate having a fourth main surface exposed to the inside and a third main surface opposite the fourth main surface,
the first glass plate and the second glass plate each having a tin surface on which tin is detected and a non-tin surface whose tin concentration is lower than the tin concentration on the tin surface,
the first main surface being defined by the tin surface,
the virtual image being based on a second reflected image formed on the first main surface.

5. Head-up display device according to claim 4 wherein the fourth main surface is defined by the non-tin surface.

6. A head-up display device that is to be mounted in a moving vehicle and enables an occupant in the moving vehicle to view a virtual image based on a reflected image of projection light in a projection section,
the projection section including an interlayer film, a first glass plate to be disposed closer to an outside of the moving vehicle, and a second glass plate to be disposed closer to an inside of the moving vehicle, the first glass plate and the second glass plate being disposed opposite each other with the interlayer film therebetween,
the first glass plate having a first main surface exposed to the outside and a second main surface opposite the first main surface,
the second glass plate having a fourth main surface exposed to the inside and a third main surface opposite the fourth main surface,
the first glass plate and the second glass plate each having a tin surface on which tin is detected and a non-tin surface whose tin concentration is lower than the tin concentration on the tin surface,
the fourth main surface being defined by the non-tin surface,
the virtual image being based on a second reflected image formed on the first main surface.

7. Head-up display device according to any one of claims 1 to 6 wherein the tin concentration on the tin surface is 10 ppm to 300 ppm.

8. Head-up display device according to any one of claims 1 to 7 wherein the tin concentration on the non-tin surface is less than 10 ppm.

9. Head-up display device according to any one of claims 1 to 8 wherein a region of the first reflected image or the second reflected image extends 150 mm or more in a vertical direction of the projection section.

10. Head-up display device according to any one of claims 1 to 9 wherein the projection light comprises S-polarized light and the interlayer film includes a half-wave plate.

11. Head-up display device according to any one of claims 1 to 9 wherein the projection light comprises P-polarized light and the interlayer film includes a half-wave plate.

12. Head-up display device according to claim 10 or 11 wherein rays of the projection light are incident on the first main surface at Brewster's angle.

13. Head-up display device according to any one of claims 1 to 12 wherein the projection section has a wedge profile with a thickness that changes gradually in a region of the first reflected image or the second reflected image.
